# EUROPEAN PATENT APPLICATION

(11) **EP 2 151 902 A1**
(43) Date of publication of application: **10.02.2010**
(21) Application number: 08013925.6
(22) Date of filing: 04.08.2008
(51) Int. Cl.: H02B 7/06, H02B 13/025

(54) **The advanced transformation center**

(71) Applicant: EMAC (Electromechanical Applications Consulting) Limited, 1521 Nicosia (CY)
(72) Inventor: EMAC (Electromechanical Applications Consulting) Limited, 1521 Nicosia (CY)
(74) Representative: Clarke, Alison Clare

(57) **Abstract**

The advanced transformation center is created by the application of the invented and unique interconnection scheme of the equipment comprising it. This involves the application of a vacuum breaker which is interconnected in such a way with the other equipment, that the main power flow of the loop is channeled only through this vacuum breaker. All the other switchgear need to break only the distribution transformer load current with the possible consequence to enable the elimination of the SF6 and the use of mineral oil, esters or solid insulation instead. Additionally, the improvement of the reliability of the cable network is accomplished by introducing automatic sectionalizing points and the elimination of the HRC fuses by having the vacuum breaker protect the distribution transformed. In case of the use of dielectric fluid instead of SF6, a system handling the pressure and the explosive gases generated during the internal arc test is invented, and presented.

## Description

This invention is an evolution of patent application 08008899.0 / EP08008899 and addresses the case when the switchgear (6) in Figure 1, of the patent application 08008899.0 /EP08008899 could be a vacuum breaker. The optional request of disconnecting the main power connections in addition and in series with the vacuum bottles of the vacuum breaker (6) as per some electrical utilities requirement and the successful performance of the internal arc test for the involved electrical apparatus containers/enclosures is addressed.

The purpose of this invention is to create a special interconnection scheme, the application of which will fulfill the above requirement and create the appropriate containers which will fulfill the requirements of the internal arc test conditions using air or SF6 or mineral oil or esters or solid material as an electrical insulating medium and in case of eliminating the use of SF6, the creation of a compact ecological transformation center could be achieved.

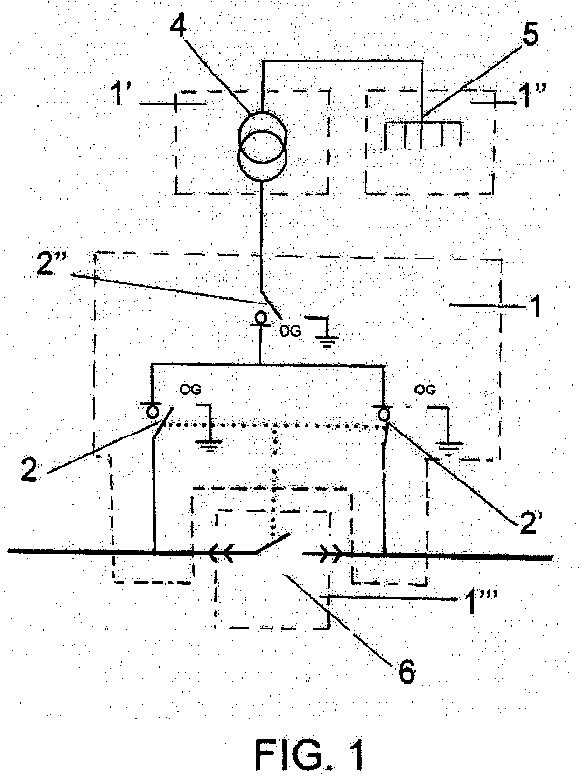

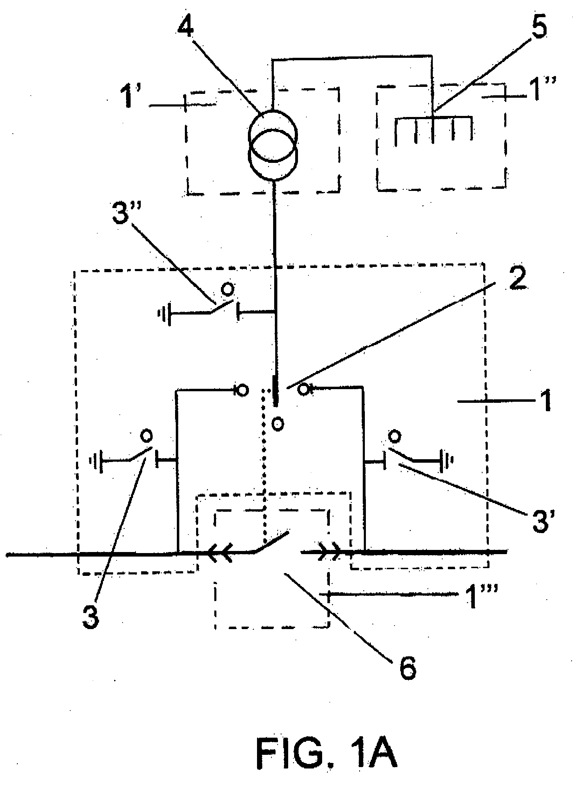

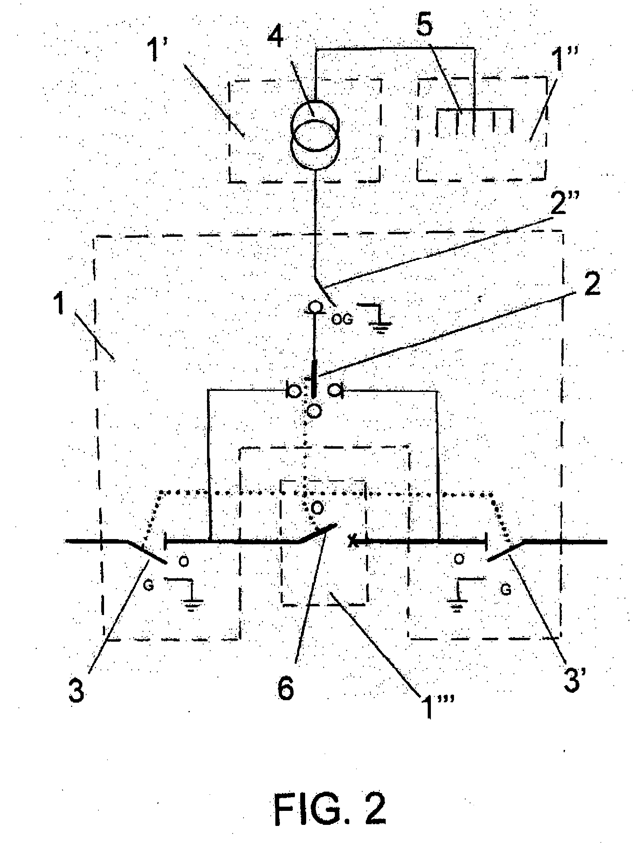

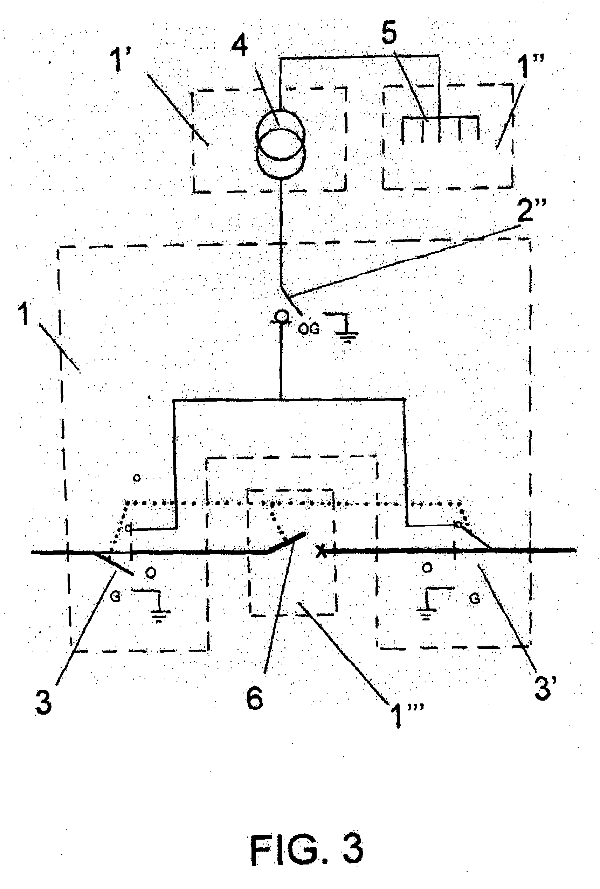

For above reasons the vacuum breaker (6) in Figure 1 and 1A can be of the withdrawable type and an evident disconnecting function can be accomplished or by using the disconnect and grounding switches (3-3') as shown in the single line diagram in Figure 2 or two V-blade type load break and grounding switches (3- 3') in Figure 3, which will combine the functions of (2 - 2' -3-3') as shown in Figure 1'1A and Figure 2. The use of the vacuum breaker with the various switches (2-2'-2"-3-3') needs to address the specific internal arc test requirements of the containers which are used to contain this electrical apparatus and the dielectric fluid. In the case of using mineral oil or esters instead of air or SF6 as an insulation medium, a solution is invented and presented to address the internal arc test requirements for enclosures containing this electric apparatus.

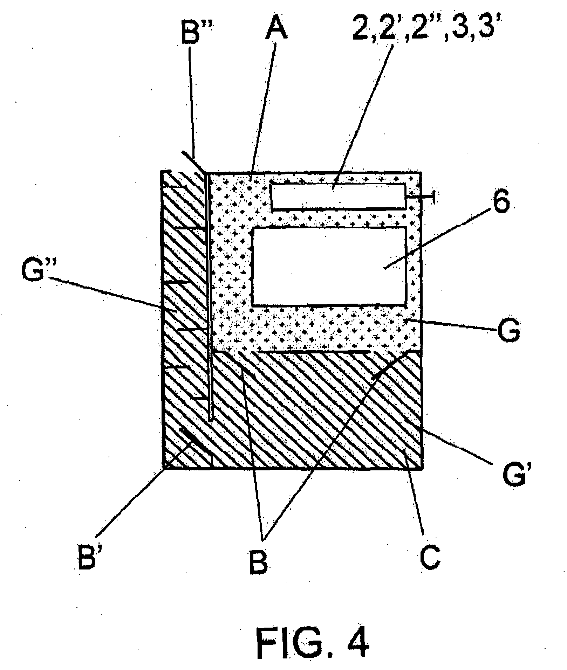

In the case of the use of dielectric fluids, special concepts are introduced in order to manipulate the pressure and the explosive and self igniting gasses created during an internal arc test and fulfill the safety conditions by using significantly bigger pressure valves (B-B'-B") and channeling the gasses through pressure diffusion chambers/containers (G-G') filled with an oxygen free gas like nitrogen and/or gas cooling materials (C) in a cascading manner as per Figure 4, Figure 5 and Figure 6.

### BACKGROUND OF THE INVENTION

As an evolution of the patent application 08008899.0 /EP08008899 and the use of a vacuum breaker (6), fulfillment of the requirement by some electrical utilities of establishing additional disconnection in series with the vacuum bottles of the vacuum breaker needs to be accomplished. For this purpose the additional function of the disconnection of the vacuum breaker is required, which creates a challenge in meeting the internal arc test requirements specifically if instead of using SF6 or air the utilization of mineral oil or esters as dielectric is applied.

In case of the use of air or SF6 or solid insulation, the interconnection schemes in Figures 1 and 1A, are applicable and easily applied with air or SF6 or solid insulation switches and their air or SF6 or solid insulated busbars system.

### DESCRIPTION OF THE INVENTION

The advanced transformation center presented in the invented interconnection schemes as shown in the single line diagrams in Figures 1,1A, 2 and 3, using a vacuum breaker (6) requires an additional disconnecting capability either by using a draw-out type arrangement and by moving the position of the six connection points of the vacuum breaker with the power cables as per the invented schemes in the single line diagrams in Figures 1 and 1A or by adding disconnect switches in series with the vacuum breaker as shown in the interconnection scheme in the single line diagram in Figure 2 and Figure 3 with the introduction of the off load disconnectors and grounding switches (3 - 3') in Figure 2, or the V-blade switches (3 - 3') in Figure 3. The requirement on the switches (3-3') in Figure 2 are very light duty (off load disconnection and grounding) and similarly the requirements on the load break switch (2 ) and the optional switch (2'),is only load breaking capacity of the transformer load current.

The switches ( 2-2') in Figure 1, the switch (2) in Figure 1A, the switches (3-3') in Figure 2 and the V- blade switches (3- 3') in Figure 3 are interlocked accordingly as stated in the patent application 08008899.0/EP08008899.

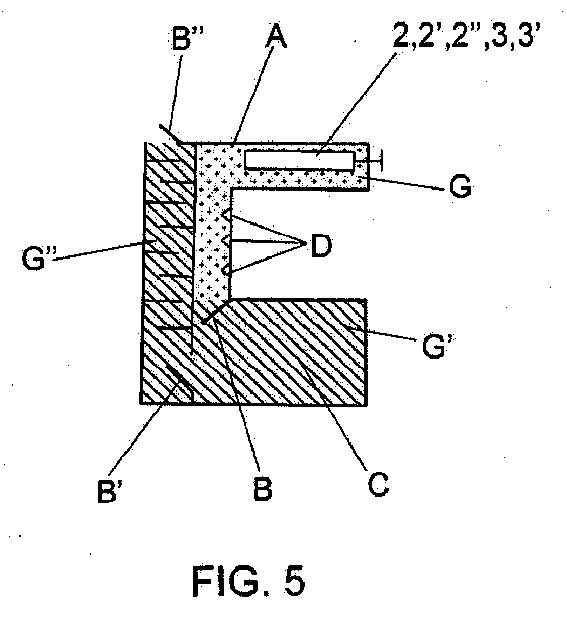

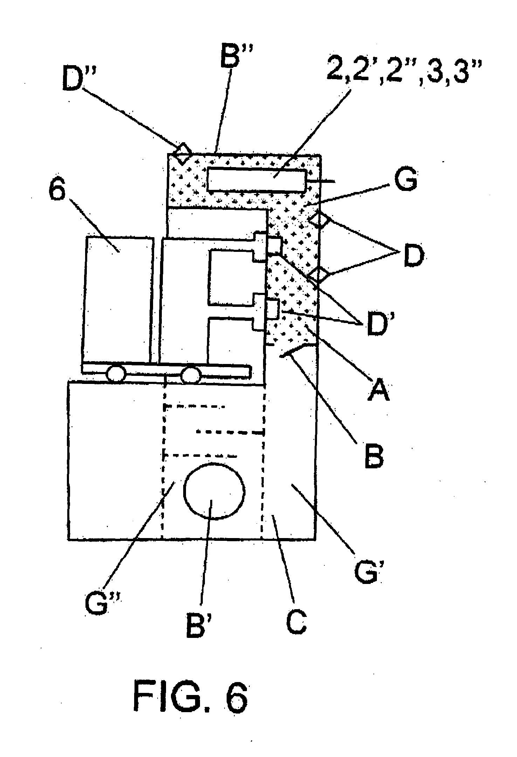

In the case of instead of using air or SF6 as insulating medium and in order to fulfill the internal arc requirements the options of locating the vacuum breaker (6) inside the same tank (G) with the switches (2, 2', 2", 3, 3") is addressed in Figure 4, as well having the vacuum breaker (6) located outside the container (G), where the switches (2, 2', 2", 3, 3") in Figure 5 and Figure 6 are located, and either an air insulated or solid insulated vacuum breaker (6) can be used, either directly plugged (D) into the container (G) or connected via cable connectors (D) to container (G) as per Figure 5, or the incoming and outgoing power cables connected to the switches (2-2'-2"-3-3') in the container (G) through the bushings (D) and the vacuum breaker (6) through the bushings (D') and the transformer connection through the bushings (D") as shown in Figure 6.

In addition to the conventional pressure relief problem encountered with the containers of air or SF6 insulated switchgear by the performance of the internal arc test, the use of mineral oil or esters as dielectrics requires a special concept to avoid contact with the oxygen of the highly explosive and flammable gasses generated during the test, and to lower the pressure and the temperature significantly in order to avoid self ignition and explosion before they will be released in the air.
In Figure 4, the container (G) where the switches (2, 2', 2", 3, 3") and the vacuum breaker (6) are located, is filled with an oxygen free dielectric fluid (A) which could be either mineral oil or esters and depending on the arc test requirements defined by the electrical utility, one or more specially big (10-25cm) pressure vents (B) are needed located at or near the bottom of the container (G) in order to facilitate the removal of the dielectric fluid from the path of the electric are and to vent the explosive gasses and the dielectric fluid (A) in to the sub container (G') which is filled with an oxygen free gas, like nitrogen and optionally with heat absorption material (C). Further as an additional optional step to be used, if required by a higher internal arc requirement, a second set of vents (B') will operate to channel the gasses and a portion of the dielectric fluid (A) into the sub container (G") which could be filled either with nitrogen and/or heat absorption material (C) or air and heat absorption material and which is build to create a cooling labyrinth.

The final optional set of valves (B") art located on the top of the sub container (G") and will operate in cascading manner with B' and B.

The size of the valves, their number and the size of the sub-container G, G' and G" and the use of an oxygen free gas, like nitrogen and heat absorption material, depends on the requirements defined by the electrical utility which will use the equipment (i.e. the kilo amps of the internal arc and the duration of the arc).
In Figure 5, the vacuum breaker is not located inside the container (G) but it is connected, either by feed through bushings (D) or cable connectors (D) and in Figure 6, the vacuum breaker is connected through the special bushings (D').

The concept shown in Figure 5 and in Figure 6, functions similarly as already is described for the concept shown in Figure 4.

In case solid insulation will be used for the switches (2, 2', 2",3, 3") in Figures 1, 2 and 3, for the busbars and the vacuum breaker (6), there will be no need for internal arc test.

In case air or SF6 insulation will be used for the switches (2, 2'2", 3, 3") in Figure 1, Figure 2 and Figure 3 and the vacuum breaker (6) will he air or SF6 insulated as well, then the internal arc test requirement will be applied and the relevant conventional pressure venting concepts will suffice.

### DESCRIPTION OF DRAWINGS

### Figure 1

Shows the single line diagram of the advanced transformation center, indicating clearly the invented interconnection scheme of the vacuum breaker (6) through which the main power flow of the distribution line is channeled, the load break and grounding switches (2, 2' and 2") through which only the transformer load current is channeled, and their interlocking functions with each other and the vacuum breaker (6). The vacuum breaker (6) could be of the withdrawable type, providing the required disconnecting feature required by some utilities.

### Figure 1 A

Shows the single line diagram of the advanced transformation center, indicating clearly the invented interconnection scheme of the vacuum breaker (6) through which the main power flow of the distribution line is channeled, the transformer(s) load current break three position switch (2) through which only the transformer(s) load current is channeled and at least two (3,3') simple grounding switches or if the transformer cable connection is required to be grounded as well then three simple grounding switches (3,3',3") The optional interlocking between the vacuum breaker (6) and the three position load break switch (2) is shown as well The vacuum breaker (6) could be of the withdrawable type, providing the optional disconnecting feature required by some electrical utilities.

### Figure 2

Shows the single line diagram of the advanced transformation center indicating clearly the invented interconnection scheme of the vacuum breaker (6) and the off-load disconnecting and grounding switches (3 - 3') connected in series with the vacuum breaker on either side of it and through which the main power flow of the electric distribution line is channeled and the load break switches (2) and the optional load break and grounding switch (2") through which only the transformer load current is channeled and the interlocking function of the switches (2 - 2' - 3 - 3") with each other and the breaker (6).

### Figure 3

Shows the single line diagram of the advanced transformation center indicating clearly the invented interconnection scheme of the vacuum breaker (6) and the V-blade type disconnect transformer load current breaking and grounding switches (3 and 3') in series with the vacuum breaker (6) on either side of it and through which the main power flow of the electrical distribution line is channeled. The V-blade switches (3 and 3') need to break only the transformer load current and there is an interlocking between each other (3 and 3') and the breaker (6).

### Figure 4

Shows the container 1, of Figure 1, Figure 2 and Figure 3 consisting of:
Container (G) filled either with air, SF6 or dielectric fluid (A) and containing the switches (2,2', 2", 3, 3') and the vacuum breaker (6) of Figure 1, Figure 2 and Figure 3.
In case of the use of an oxygen free dielectric fluid (A), container (G') is containing optionally an oxygen free gas, like nitrogen and optionally any heat absorbing and cooling material (i.e. pumice, lava, ceramic, metal). There are one or more pressure relief valves (B) on the bottom of the container (G), of significant size (10-25cm) to operate upon initiation of the arc test in container (G) located at or near the bottom of container (G) in order to facilitate the removal of the dielectric fluid from the path of the arc and release the gasses and the dielectric fluid in container (G') and the pressure relief (B') which will operate immediately (in cascade) after the operation of valves(s) (B) releases the gasses and the dielectric fluid to container (G").
Container (G") containing an oxygen free gas, like nitrogen (optional) or atmospheric air, heat absorbing material and having a labyrinth forcing the gases to zigzag on their way to the top where the optional final pressure valve (B") is located and release the gasses in the atmosphere.

### Figure 5

Is similar to figure 4, except the vacuum breaker (6) in Figure 1, Figure 2 and Figure 3 is not located inside the container (G) in Figure 5, but in its own container 1"' in Figures 1, 2 and 3 and is connected with the switches (2, 2', 2", 3, 3') which are located inside the container (G) via either feed through bushings (D) or cable connectors (D).

### Figure 6

Is similar to Figure 4, except the vacuum breaker (6) in Figure 1, Figure 2 and Figure 3 is not located inside the container (G), but in its own container 1"' in Figure 1. 2 and 3 and is connected with the switches (2, 2', 2", 3, 3') which are located inside the container (G) and the incoming and outgoing main power cables through the special bushings (D'). The bushings (D) in container (G) are used for the incoming and outgoing main power line connection and the bushings (D") for the transformer connection

### PREFERRED EMBODIMENTS OF THE INVENTION

The interconnection schemes of the equipment used for the invested advanced transformation center is utilized primarily in the medium voltage cable networks and its single line diagrams are shown in Figures 1,1A, 2 and 3.

The vacuum breaker (6) in Figure 1 could be of the withdrawable type and as shown in the single line diagram of the invented interconnection scheme, is interconnected with all the other switches of the advanced transformation center in such a way, that the distribution line main power flow (the loop current) is channeled only through this vacuum breaker and the possibility of an off-load disconnection of the vacuum breaker, manual, and remotely controlled is provided. All the other switches are required to handle the transformer(s) load current and the maximum grounding current.

Similarly the vacuum breaker (6) in Figure 1A could be, if required, of the withdrawable type and as shown in the single line diagram of the invented interconnection scheme, is interconnected with the three position transformer(s) load current break and fault make switch (2) of the advanced transformation center in such a way , that the distribution line main power flow (the loop current) is channeled exclusively only trough this vacuum breaker (6) and through the three position load brake, fault make switch (2) only the transformer(s) load current. All the other simple grounding switches (3,3',3") need to handle the grounding requirements of the line cables and the transformer interconnection cable.

Similarly the vacuum breaker (6) in Figure 2 and 3 can be disconnected by the switches(3-3') and in the case of the scheme shown in Figure 2, the switches(3-3') are off load disconnectors and grounding switches and the switch (2) needs to have the transformer(s) load current breaking capacity, and in the case of the scheme shown in Figure 3, the v-blade switches(3-3') need to have only the transformer(s) load current breaking capacity, and the switch (2') having a transformer(s) load current breaking capacity and grounding and being optional in all the schemes shown in Figures 1, 2 and 3.

In addition to the use of SF6 and in the case of the use of mineral oil or esters as a dielectric fluid, instead of SF6, the possibility of creating an ecological transformation center is provided. The main obstacle in the use of these dielectric fluids is the fulfillment of the internal arc test requirements which is achieved by using one to three containers (G-G'-G") as shown in Figures 4, 5 and 6 interconnected by pressure relief valves (B-B'-B") which operate in cascade and the valve(s) (B) located at or near the bottom of the container (G) in order to facilitate the removal of the fluid from the arc and using in container (G) the dielectric fluid (A) and eliminate any oxygen and in containers (G'-G") optionally an oxygen free gas, like nitrogen with/or heat absorption material and a labyrinth like cooling arrangement in container (G').The number of the additional containers (G',G") and the valves (B',B") and the use of oxygen free gas and heat absorption material is a function of the kilo amperes required by the internal arc test. Installing the breaker (6) in Figures 1, 1A, 2 and 3 in the main line and making it handle the main power flow, adds an extra automatic sectionalizing point in the main loop, increasing the reliability of the network and facilitating the instant identification and isolation of the faulty portion of the network and thus accelerating power restoration to the consumers.

As per the invented interconnection scheme of the advanced transformation center as in Figure 1, 1A, 2 and 3 the way the breaker (6) is interconnected with the transformed (4), allows for the elimination of the conventional HRC fuses, and the breaker protects the transformer(s) located in the same transformation center or further down the line with the proper programming of the protection coordination requirements.

The utilization of the invented interconnection scheme for the advanced transformation center allows for a very compact design with significant flexibility in the integration possibilities of the equipment involved in a various combination of containers i.e. 3 different containers for the breaker or the load break switch, the switches and the transformer, or 2 different containers for the breaker or load break switch together with the switches and the transformer and facilitating the possibility of compact submersible transformation centers, operated from a top man hole.

Using a variety of sensors i.e. pressure, temperature load current, dielectric fluid sensors etc. the ecological transformation center will be easily monitored and controlled locally or remotely.

The utilization of the breaker (6) in Figure 1, 1A, 2 and 3 to be positioned in the main feeder loop allows more flexibility in the overall architecture of underground cable networks.

## Claims

1. Advanced transformation center to be used in electrical medium voltage cable distribution networks consisting of one or more distribution transformer(s) (4) and low voltage panel(s) (5) and it includes one breaker (6), through which the main power flow of the distribution line is channeled and a combination of transformer load break and grounding switches, through which only the transformer(s) load current is channeled is **characterized** because of the option of using only one three position transformer(s) load current break and fault make switch (2) in combination with either two (3,3') or three (3,3',3") simple grounding switches and the breaker (6) can be provided with the optional disconnect feature either by being of the draw-out type or through the use of either in combination and relevant interlocking with two three-position, transformer(s) load breaking, fault making and grounding switches (3-3') in cooperation and required interlocking with a three-position transformer load break and fault make switch (2) and the optional three-position transformer load brake ,fault make and grounding switch (2") or in combination and interlocking with two v-blade three-position transformer(s) load break, fault make and grounding switches (3-3') and the optional three-position transformer(s) load break ,fault make and grounding switch (2") and their enclosure/container (G), containing air or SF6 or oxygen free dielectric fluid (A), the relevant combination of switches (2-2'-2"-3-3'), optionally the vacuum breaker (6) and optionally the transformer (4) and in the case of the use of the dielectric fluid (A), this container (G) is connected with one additional container (G') through pressure venting valve(s) (B) which are located at or near the bottom of container (G) in order to facilitate the removal of the fluid from the arc and the container (G') filled optionally with an oxygen free gas, like nitrogen and heat absorption material (C) and optionally further connected with an additional container (G") through pressure venting valve(s) (B') operating in cascade with the previous valve(s) (B) and filled optionally with an oxygen free gas, like nitrogen and heat absorption material (C) and having an optional gas cooling flow labyrinth ending to a final optional pressure venting valve(s) (B") operating in cascade with the previous pressure venting valves (B-B'), fulfilling the internal arc test requirements.

2. Advanced transformation centers according to claim 1, **characterized in that** the container 1, consists of the container (G), which in addition to including the switches (2-2'-2"-3-3'), includes as well the vacuum breaker (6) and is filled with air or SF6 or a dielectric fluid (A) instead of SF6 or air and in this case, is constructed and connected with containers (G') and (G"), (G") having an optional labyrinth like structure to increase the cooling effect of the gasses in such a way to fulfill the requirements of the internal arc test by diffusing the pressure, cooling the gasses and eliminating the danger of explosion and fire, by channeling the arc gasses and part of the fluid through a pressure valve system (B, B', B") operating in cascade and using in the containers (G'-G") optionally an oxygen free gas, like nitrogen and/or heat absorption materials (C), the use of the container (G') or (G") being optional depending on the internal arc test requirements defined by the electrical utility.

3. Advanced ecological transformation center according to claim 1 **characterized in that** the vacuum breaker (6), can be either air or SF6 or solid insulated and located outside the container (1) and connected with the switches (2-2'-2"-3-3') via either the feed through bushings (D) or cable connectors (D) or through the special bushings (D') and the incoming and outgoing power cables are connected through the bushings (D) and the container (1) in the case of non-use of air or SF6, consists of the containers (G-G'-G") which are constructed to diffuse the pressure, cool the gasses and eliminate the danger of explosion and fire by channeling the gasses and part of the dielectric fluid through a pressure valve (B-B'-B") system operating in cascade and rising in the containers (G'-G") optionally an oxygen free gas, like nitrogen and/or heat absorption materials (C) and the use of the containers (G') and (G") and the valves (B' - B") being optional depending on the internal are test requirements applied.

4. Advanced transformation center according to claim 1, **characterized in that** the dielectric used for the disconnect, load break and grounding switches (2-2'-2"-3-3') and for the vacuum breaker (6), is air or SF6 or esters or mineral oil or solid and the individual switches (2-2'-2"-3-3') and the vacuum breaker (6) are interconnected as per the single line diagrams.

5. Advanced transformation center according to claim 1, **characterized in that** the protection of the transformer(s) located in the same transformation centers or adjacent and the elimination of the transformer protection fuses is provided by the vacuum breaker (6) through the special interlocking with the disconnect load break switches (2, 2', 3, 3') and the required fault sensing and protection relay programming and/or in coordination with the transformer's built-in protection in the case of the use of self-protected transformers.

6. Advanced transformation center according to claim 1, **characterized in that** the automatic protection and sectionalizing of the main power line is performed by the breaker (6) using the required sensors, protection relays and relevant communication, programming and coordination concepts accordingly.

7. Advanced transformation center according to claim 1, **characterized in that** the complete remote and automatic monitoring and control, is performed by adding sensing devices in the distribution transformer(s) (4) circuit and various sensors in the transformer(s) (4), like current, pressure, temperature, dielectric fluid level e.t.c. and motorizing the required load break disconnect and grounding switches accordingly.

## Amended claims

### Amended claims in accordance with Rule 137(2) EPC.

**1.** Advanced transformation center, especially created to be used in electrical medium voltage cable distribution networks consisting of one or more distribution transformers (4), one or more low voltage distribution panel(s) (5), at least two load break and grounding switches (2, 2'), which are interlocked with each other, one in the open position (N.O.) and the other in the closed position (N.C.) or vice versa, through which only the distribution transformer(s) (4) load current is circulating, and one breaker (6) which is interlocked with the two load break and grounding switches (2, 2'), and through this breaker (6), only the main power flow of the cable distribution line is channeled, **characterized in that** the breaker (6) is a withdrawable vacuum breaker and the transformation center includes a further load break and grounding switch (2") connected in series between the at least two switches (2, 2') and at least one of the transformers (4).

**2.** Advanced transformation center according to claim 1, **characterized in that** three simple grounding switches (3, 3', 3") are substituted for the three load break and grounding switches (2, 2', 2") respectively, and said transformation center includes also one load current break 3-position switch (7) connected to either side of the vacuum breaker (6) and to the transformer (4).

**3.** Advanced transformation center according to claim 2, **characterized in that** said load current break 3-position switch (7) and said vacuum breaker (6) are operationally interlocked with each other.

**4.** Advanced transformation center according to any one of claims 2 and 3, **characterized in that** said three simple grounding switches (3, 3', 3") are removed, and said transformation center includes two respective off-load disconnecting and grounding switches (8, 8') connected between a respective side or the vacuum breaker (6) and the main power flow distribution line, the at least two taps for the transformer(s) (4) respectively being located between each off-toad disconnecting and grounding switch (8, 8') and a respective side of the vacuum breaker (6), and said transformation center including also a respective load break and grounding switch (2") between the load current break 3-position switch (7) and the transformer (4).

**5.** Advanced transformation center according to claim 4, **characterized in that** said load current break 3-position switch (7), vacuum breaker (6), load break and grounding switch (2"), and off-load disconnecting and grounding switches (8, 8') are operationally interlocked with each other.

**6.** Advanced transformation center according to any one of claims 4 and 5, **characterized in that** said load current break 3-position switch (7) is removed, and two V-blade type load break and grounding switches (9, 9') are substituted for the two off-load disconnecting and grounding switches (8, 8') respectively, said vacuum breaker (6) and said V-blade type load break and grounding switches (9, 9') being operationally interlocked with each other.

**7.** Advanced transformation center according to any one of the preceding claims, **characterized in that** both the vacuum breaker (6) and the different switches (2, 2', 2,", 3, 3', 3", 7, 8, 8', 9, 9') are located in the same container (G) being connected through at least one pressure vent (B) to a sub-container (G').

**8.** Advanced transformation center according to claim 7, **characterized in that** said container (G) is filled with an oxygen free dielectric fluid (A), and said sub-container (G') is filled with an oxygen free gas and an optional heat absorption material (C).

**9.** Advanced transformation center according to any one of claims 7 and 8. **characterized in that** said sub-container (G') is provided with at least one further vent (B') connecting sub-container (G') with a further sub-container (G") filled with either an oxygen free gas and/or heat absorption maternal or air and heat absorption material, and which is adapted to create a cooling labyrinth from the at least one vent (B') to at least one optional vent (B"), said vents (B, B', B") operating in a cascading manner.

**10.** Advanced transformation center according to any one of claims 7 to 9, **characterized in that** at least one the vents (B, B', B") is 10-25 cm in diameter.

**11.** Advanced transformation center according to any one of claims 7 to 10, **characterized in that** the vacuum breaker (6) is located in its own container (1"') outside container (G) but connected to switches (2, 2', 2", 3, 3'. 3", 7, 8, 8', 9, 9') therein by either feed through bushings (D) or cable connectors (D).

**12.** Advanced transformation center according to any one of claims 7 to 10, **characterized in that** the vacuum breaker (6) is located in its own container (1"') outside container (G) but connected to switches (2, 2', 2", 3, 3', 3", 7, 8, 8', 9, 9') therein and to incoming and outgoing main power cables through special bushings (D'), said container (G) being provided with bushings (D) for the incoming and outgoing main power line connection and with bushings (D") for the transformer connection.

**13.** Advanced transformation center according to any one of the preceding claims, **characterized by** comprising sensing and protecting devices and relevant communication, programming and coordination means adapted to operate said breaker (6) interlocked with relative switches (2, 2', 2", 3, 3', 3", 7, 8, 8', 9, 9') for automatically protecting and sectionalizing the main power line in accordance with data from said sensing and protecting devices.

**14.** Advanced transformation center according to claim 13, **characterized in that** said sensing and protecting devices comprise devices for sensing current, pressure, temperature, dielectric fluid level, and the like, in the distribution transformer(s) (4) and its circuit, and optionally in at least one of the containers (G, G', G", 1, 1', 1", 1"').
